# EUROPÄISCHE PATENTANMELDUNG

(11) **EP 4 737 694 A2**
(43) Veröffentlichungstag der Anmeldung: **06.05.2026**
(21) Anmeldenummer: 26161465.5
(22) Anmeldetag: 03.02.2022
(51) Int. Cl.: F01D 25/30

(54) **KRÜMMER, STRÖMUNGSMASCHINE MIT EINEM SOLCHEN KRÜMMER, ABGASTURBOLADER MIT EINER SOLCHEN STRÖMUNGSMASCHINE, UND BRENNKRAFTMASCHINE MIT EINEM SOLCHEN KRÜMMER**

(30) Priorität: 05.02.2021 DE 102021201115
(62) Teilanmeldung aus: 22703625.8
(71) Anmelder: Rolls-Royce Solutions GmbH, 88045 Friedrichshafen (DE)
(72) Erfinder: Lachenmaier, Nicolas, 88361 Altshausen (DE); Refert, Tim, 88048 Friedrichshafen (DE); Männle, Tobias, 88212 Ravensburg (DE)
(74) Vertreter: Gleiss Große Schrell und Partner mbB

(57) **Zusammenfassung**

Die Erfindung betrifft einen Krümmer (15) zur Strömungsumlenkung eines den Krümmer (15) von einer Einströmseite (17) zu einer Ausströmseite (27) durchströmenden Mediums, mit einer ein Strömungsvolumen (31) des Krümmers (15) begrenzenden Wandung (29), wobei die Wandung (29) einen gekrümmten Innenwandabschnitt (41) mit einem ersten, kleineren Krümmungsradius (r1) und einen gekrümmten Außenwandabschnitt (39) mit einem zweiten, größeren Krümmungsradius (r2) aufweist, wobei der Innenwandabschnitt (41) einen Einformabschnitt (43) aufweist, wobei der Einformabschnitt (43) in das Strömungsvolumen (31) hinein eingeformt und in Strömungsrichtung zu der Ausströmseite (27) hin eingezogen ist.

## Beschreibung

Die Erfindung betrifft einen Krümmer, eine Strömungsmaschine mit einem solchen Krümmer, einen Abgasturbolader mit einer solchen Strömungsmaschine, und eine Brennkraftmaschine mit einem solchen Krümmer.

Bei einem Krümmer, der von einer Einströmseite zu einer Ausströmseite von einem Medium durchströmt wird, entsteht stets das Problem eines Druckverlusts über dem Krümmer. Wird ein solcher Krümmer im Abgasstrang einer Brennkraftmaschine eingesetzt, erhöht sich die zu verrichtende Ausschiebearbeit, die durch die Brennkraftmaschine aufgebracht werden muss. In der Folge verschlechtert sich der Wirkungsgrad der Brennkraftmaschine. Besonders kritisch sind dabei Druckverluste, die stromabwärts einer Turbine, beispielsweise eines Abgasturboladers, entstehen. Diese haben nämlich eine gehebelte Wirkung auf die Ausschiebearbeit, da sie mit dem Druckverhältnis der Turbine multipliziert werden.

Der Erfindung liegt daher die Aufgabe zugrunde, einen Krümmer, eine Strömungsmaschine mit einem solchen Krümmer, einen Abgasturbolader mit einer solchen Strömungsmaschine, und eine Brennkraftmaschine mit einem solchen Krümmer zu schaffen, wobei die genannten Nachteile zumindest reduziert sind, vorzugsweise nicht auftreten.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten Ausführungsformen.

Die Aufgabe wird insbesondere gemäß einem ersten Aspekt gelöst, indem ein Krümmer zur Strömungsumlenkung eines den Krümmer von einer Einströmseite des Krümmers zu einer Ausströmseite des Krümmers durchströmenden Mediums geschaffen wird, wobei der Krümmer eine ein Strömungsvolumen des Krümmers begrenzende Wandung und einen in dem Strömungsvolumen einströmseitig zentral angeordneten Diffusorabschnitt aufweist. Der Diffusorabschnitt ist mit der Wandung einstückig ausgebildet. Mittels des einströmseitig zentral angeordneten Diffusorabschnitts kann der Druckverlust über dem Krümmer deutlich reduziert werden. Insbesondere wird eine Rezirkulation an einer an den Diffusorabschnitt angrenzenden Turbinennabe minimiert, wenn der Krümmer mit einer Turbine verwendet wird. Dass der Diffusorabschnitt mit der Wandung einstückig ausgebildet ist, ermöglicht in besonderer Weise eine optimierte Strömungsführung, wobei insbesondere Strömungsablösungen zumindest weitgehend vermieden, vorzugsweise verhindert werden können. Nicht zuletzt kann so der Wirkungsgrad einer Brennkraftmaschine, mit der der Krümmer verwendet wird, gesteigert werden. Der einströmseitig zentral angeordnete Diffusorabschnitt hat darüber hinaus den Vorteil, dass ein axiales Ausschieben eines Turbinenrads im Fall eines Bersts erschwert wird, sodass der hier vorgeschlagene Krümmer in Zusammenhang mit einer Turbine, mit der er verwendet wird, verbesserte Containmenteigenschaften aufweist.

Dass der Diffusorabschnitt einströmseitig zentral angeordnet ist, bedeutet insbesondere, dass der Diffusorabschnitt an der Einströmseite des Krümmers mittig, insbesondere auf einer entlang einer lokalen Haupt-Strömungsrichtung weisenden, einströmseitigen Haupt-Strömungsachse des in den Diffusor einströmenden Mediums angeordnet ist.

Insbesondere ist der Diffusorabschnitt mit der Wandung materialeinheitlich ausgebildet.

Gemäß einer Weiterbildung der Erfindung ist vorgesehen, dass der Diffusorabschnitt einströmseitig im Betrieb des Krümmers umströmt in dem Strömungsvolumen angeordnet ist. Dies bedeutet insbesondere, dass der Diffusorabschnitt im Betrieb des Krümmers von dem den Krümmer durchströmenden Medium umströmt ist. Dies erweist sich zur Strömungsführung in dem Krümmer als besonders günstig, wobei in besonders vorteilhafter Weise ein Druckverlust über dem Krümmer minimiert wird. Insbesondere ist der Diffusorabschnitt ein einströmseitig mittig zentral in dem Strömungsvolumen angeordnetes, massives oder allseitig gegenüber dem durchströmenden Medium geschlossenes Element, welches nicht selbst von dem Medium durchströmt wird; vielmehr umgibt das den Krümmer durchströmende Medium den Diffusorabschnitt.

Gemäß einer Weiterbildung der Erfindung ist vorgesehen, dass der Diffusorabschnitt als Nabendiffusor für eine Strömungsmaschine ausgebildet ist. Auf diese Weise ist es möglich, das Abströmverhalten des Mediums von einer Nabe der Strömungsmaschine, insbesondere einer Nabe einer Wandlereinrichtung zur Wandlung von Strömungsenergie in Rotationsenergie - oder gegebenenfalls je nach Ausgestaltung der Strömungsmaschine auch umgekehrt -, insbesondere eines Turbinenrads, besonders günstig zu beeinflussen. Insbesondere ist der als Nabendiffusor ausgebildete Diffusorabschnitt eingerichtet, um unmittelbar, vorzugsweise ohne radialen Versatz, insbesondere entlang seines gesamten Umfangs um die Haupt-Strömungsachse ohne radialen Versatz, an die Nabe der Strömungsmaschine anzuschließen.

Gemäß einer Weiterbildung der Erfindung ist vorgesehen, dass der Diffusorabschnitt aus der Wandung ausgeformt ist. Dies stellt eine sowohl besonders strömungsgünstige als auch konstruktiv besonders einfache Ausgestaltung des Krümmers dar, wobei der Diffusorabschnitt quasi aus der Wandung herausgebildet ist. Insbesondere ist der Diffusorabschnitt aus einem Außenwandabschnitt der Wandung ausgeformt.

Gemäß einer Weiterbildung der Erfindung ist vorgesehen, dass die Wandung einen - in Krümmungsrichtung des Krümmers - gekrümmten Innenwandabschnitt mit einem ersten, kleineren Krümmungsradius und einen - in Krümmungsrichtung des Krümmers - gekrümmten Außenwandabschnitt mit einem zweiten, größeren Krümmungsradius aufweist, wobei der Außenwandabschnitt in das Strömungsvolumen hinein eingeformt ist, um den Diffusorabschnitt zu bilden. Dies stellt eine sowohl besonders strömungsgünstige als auch konstruktiv besonders einfache Ausgestaltung des Krümmers dar, wobei der Diffusorabschnitt quasi aus dem Außenwandabschnitt gebildet ist. Insbesondere ist der Außenwandabschnitt in das Strömungsvolumen hinein eingestülpt, um den Diffusorabschnitt zu bilden. Aufgrund seiner gebogenen Geometrie weist der Krümmer - in Krümmungsrichtung oder Umlenkrichtung - einen Bereich mit kleinerem Krümmungsradius und einen Bereich mit größerem Krümmungsradius auf. Der Begriff "innen" bezieht sich in diesem Kontext auf den Bereich mit kleinerem Krümmungsradius, der Innenwandabschnitt ist also derjenige Abschnitt der Wandung, welcher im Bereich des kleineren Krümmungsradius - in diesem Sinne "innen", quasi im Kurveninneren - angeordnet ist; entsprechend bezieht sich der Begriff "außen" in diesem Kontext auf den Bereich mit größerem Krümmungsradius, der Außenwandabschnitt ist also derjenige Abschnitt der Wandung, welcher im Bereich des größeren Krümmungsradius - in diesem Sinne "außen", quasi am äußeren Kurvenrand - angeordnet ist.

Der Innenwandabschnitt weist bevorzugt einen Einformabschnitt auf, der in das Strömungsvolumen hinein eingeformt und in Strömungsrichtung, das heißt in Soll-Strömungsrichtung des Mediums, eingezogen ist.

Der Einformabschnitt weist bevorzugt eine zu der Ausströmseite hin ausgerichtete Spitze auf.

Der Innenwandabschnitt weist bevorzugt in einer Längsschnittansicht des Krümmers im Bereich des Einformabschnitts mindestens einen Wendepunkt auf.

Gemäß einem zweiten Aspekt wird die Aufgabe gelöst, indem ein Krümmer zur Strömungsumlenkung eines den Krümmer von einer Einströmseite des Krümmers zu einer Ausströmseite des Krümmers durchströmenden Mediums geschaffen wird, wobei der Krümmer eine ein Strömungsvolumen des Krümmers begrenzende Wandung aufweist, wobei die Wandung einen - in Krümmungsrichtung des Krümmers - gekrümmten Innenwandabschnitt mit einem ersten, kleineren Krümmungsradius und einen - in Krümmungsrichtung des Krümmers - gekrümmten Außenwandabschnitt mit einem zweiten, größeren Krümmungsradius aufweist. Der Innenwandabschnitt weist einen Einformabschnitt auf, der in das Strömungsvolumen hinein eingeformt und in Strömungsrichtung, das heißt in Soll-Strömungsrichtung des Mediums, eingezogen ist. Vorteilhaft kann auf diese Weise insbesondere ein Camot'scher Druckverlust über dem Krümmer reduziert werden, wobei das zugrunde liegende Phänomen auch als Carnot-Stoß bezeichnet wird. Insbesondere kann eine Strömungsablösung im Bereich des Innenwandabschnitts zumindest weitgehend vermieden, vorzugsweise verhindert werden. Wird der Krümmer in Zusammenhang mit einer Brennkraftmaschine, insbesondere im Abgaspfad der Brennkraftmaschine, insbesondere als Abströmkrümmer einer Turbine eines Abgasturboladers, verwendet, kann auf diese Weise vorteilhaft der Wirkungsgrad der Brennkraftmaschine gesteigert werden. Dass der Einformabschnitt in Strömungsrichtung eingezogen ist, bedeutet insbesondere, dass der Einformabschnitt zu der Ausströmseite hin eingezogen, insbesondere zu der Ausströmseite hin - je nach Blickrichtung - eingestülpt oder ausgestülpt ist.

Aufgrund seiner gebogenen Geometrie weist der Krümmer - in Krümmungsrichtung oder Umlenkrichtung - einen Bereich mit kleinerem Krümmungsradius und einen Bereich mit größerem Krümmungsradius auf. Der Begriff "innen" bezieht sich in diesem Kontext auf den Bereich mit kleinerem Krümmungsradius, der Innenwandabschnitt ist also derjenige Abschnitt der Wandung, welcher im Bereich des kleineren Krümmungsradius - in diesem Sinne "innen", quasi im Kurveninneren - angeordnet ist; entsprechend bezieht sich der Begriff "außen" in diesem Kontext auf den Bereich mit größerem Krümmungsradius, der Außenwandabschnitt ist also derjenige Abschnitt der Wandung, welcher im Bereich des größeren Krümmungsradius - in diesem Sinne "außen", quasi am äußeren Kurvenrand - angeordnet ist.

Gemäß einer Weiterbildung der Erfindung ist vorgesehen, dass der Einformabschnitt eine zu der Ausströmseite hin ausgerichtete Spitze aufweist. Dies stellt eine besonders strömungsgünstige Ausgestaltung des Einformabschnitts dar. Die Spitze des Einformabschnitts ist insbesondere als Kappe oder Gipfel, oder als Horn, geformt.

Gemäß einer Weiterbildung der Erfindung ist vorgesehen, dass der Innenwandabschnitt in einer Längsschnittansicht des Krümmers im Bereich des Einformabschnitts mindestens einen Wendepunkt aufweist. Diese Ausgestaltung hat sich als ganz besonders strömungsgünstig, insbesondere in Hinblick auf eine Reduzierung des Druckverlusts über dem Krümmer, erwiesen. Die Längsschnittansicht ist insbesondere eine Ansicht in einer Schnittebene, in der zumindest eine Haupt-Strömungsachse des Krümmers, vorzugsweise sowohl die einströmseitige Haupt-Strömungsachse als auch eine ausströmseitige Haupt-Strömungsachse, liegen. Vorzugsweise weist eine Konturlinie des Innenwandabschnitts in der Längsschnittansicht den mindestens einen Wendepunkt auf. Vorzugsweise weist der Innenwandabschnitt, insbesondere die Konturlinie des Innenwandabschnitts, in der Längsschnittansicht des Krümmers genau einen - und nur einen - Wendepunkt auf.

Bevorzugt weist der Krümmer gemäß dem zweiten Aspekt einen in dem Strömungsvolumen einströmseitig zentral angeordneten Diffusorabschnitt auf. Der Diffusorabschnitt ist mit der Wandung einstückig ausgebildet.

Bevorzugt ist der Diffusorabschnitt einströmseitig im Betrieb des Krümmers umströmt in dem Strömungsvolumen angeordnet.

Bevorzugt ist der Diffusorabschnitt als Nabendiffusor für eine Strömungsmaschine ausgebildet.

Bevorzugt ist der Diffusorabschnitt aus der Wandung, insbesondere aus dem Außenwandabschnitt, ausgeformt.

Bevorzugt ist der Außenwandabschnitt in das Strömungsvolumen hinein eingeformt, um den Diffusorabschnitt zu bilden.

Der Krümmer gemäß dem ersten Aspekt und der Krümmer gemäß dem zweiten Aspekt sind insbesondere miteinander kombinierbar. Bevorzugt weist der Krümmer gemäß dem zweiten Aspekt mindestens ein Merkmal auf, das in Zusammenhang mit dem Krümmer gemäß dem ersten Aspekt beschrieben ist. Umgekehrt weist der Krümmer gemäß dem ersten Aspekt bevorzugt mindestens ein Merkmal auf, das in Zusammenhang mit dem Krümmer gemäß dem zweiten Aspekt beschrieben ist.

Unter einem Krümmer wird im Kontext der hier vorliegenden technischen Lehre gemäß wenigstens einem Aspekt, ausgewählt aus dem ersten Aspekt und dem zweiten Aspekt, insbesondere ein Rohrabschnitt verstanden, der eine Umlenkung für ein den Rohrabschnitt durchströmendes Medium aufweist.

In einer Ausführungsform der Erfindung gemäß wenigstens einem Aspekt, ausgewählt aus dem ersten Aspekt und dem zweiten Aspekt, ist der Krümmer ein 90°-Krümmer, das heißt der Krümmer weist eine Umlenkung von 90° für das ihn durchströmende Medium auf.

Vorzugsweise weist der Krümmer gemäß wenigstens einem Aspekt, ausgewählt aus dem ersten Aspekt und dem zweiten Aspekt, einen einströmseitigen ersten Flansch und einen ausströmseitigen zweiten Flansch auf, wobei die Flansche jeweils zur - insbesondere strömungstechnischen und/oder mechanischen - Verbindung des Krümmers mit einem an den Krümmer anschließenden, strömungsführenden Bauteil, insbesondere Rohrabschnitt, eingerichtet sind.

In einer Ausführungsform der Erfindung gemäß wenigstens einem Aspekt, ausgewählt aus dem ersten Aspekt und dem zweiten Aspekt, ist der Krümmer als Abströmkrümmer ausgebildet, das heißt eingerichtet, um abströmseitig an einer Strömungseinrichtung angeordnet zu werden und das von der Strömungseinrichtung abströmende Medium aufzunehmen und abzuführen. Insbesondere ist der Krümmer als Abströmkrümmer für eine Strömungsmaschine ausgebildet.

Der hier vorgeschlagene Krümmer gemäß wenigstens einem Aspekt, ausgewählt aus dem ersten Aspekt und dem zweiten Aspekt, ist bevorzugt mittels eines generativen Fertigungsverfahrens oder mittels eines additiven Fertigungsverfahrens herstellbar, vorzugsweise mittels eines additiven Fertigungsverfahrens oder eines generativen Fertigungsverfahrens hergestellt. Mithilfe eines solchen Verfahrens können auch komplexere Geometrien ohne weiteres effizient und kostengünstig hergestellt werden. Alternativ kommt auch eine Herstellung durch Gießen, das heißt in einem Gussverfahren, infrage. Hierbei können insbesondere Einlegeteile und/oder Schieber für die Herstellung der Geometrie des Krümmers verwendet werden.

Gemäß einer Weiterbildung der Erfindung gemäß wenigstens einem Aspekt, ausgewählt aus dem ersten Aspekt und dem zweiten Aspekt, ist vorgesehen, dass der Außenwandabschnitt in einer Schnittebene, die auf einer Querschnittsebene und auf einer Längsschnittebene des Krümmers senkrecht steht, zwei seitlich von dem Diffusorabschnitt angeordnete, in das Strömungsvolumen eingeformte Einbuchtungen aufweist. Diese Ausgestaltung hat sich als besonders strömungsgünstig, insbesondere mit Blick auf den Druckverlust über dem Krümmer, erwiesen. Eine Querschnittsebene ist eine Schnittebene, auf der zumindest eine Haupt-Strömungsachse des Krümmers, insbesondere die einströmseitige Haupt-Strömungsachse und/oder die ausströmseitige Haupt-Strömungsachse, senkrecht steht. Die hier betrachtete Schnittebene, in der der Außenwandabschnitt die beiden Einbuchtungen aufweist, steht bevorzugt senkrecht auf einer ersten Querschnittsebene, auf der die einströmseitige Haupt-Strömungsachse des Krümmers senkrecht steht, und sie steht zusätzlich senkrecht auf der Längsschnittebene. Dagegen ist die hier betrachtete Schnittebene bevorzugt parallel zu einer zweiten Querschnittsebene ausgerichtet, auf der die ausströmseitige Haupt-Strömungsachse senkrecht steht; dies gilt insbesondere für den Fall, dass der Krümmer als 90°-Krümmer, das heißt als Krümmer mit 90°-Umlenkung, ausgebildet ist, wobei in diesem Fall die einströmseitige Haupt-Strömungsachse und die ausströmseitige Haupt-Strömungsachse senkrecht aufeinander stehen.

Die Einbuchtungen sind insbesondere jeweils seitlich, jede auf einer eigenen Seite, von dem Diffusorabschnitt angeordnet. Insbesondere sind die beiden Einbuchtungen bevorzugt symmetrisch, insbesondere spiegelsymmetrisch in Bezug auf eine senkrecht auf der Schnittebene stehende Spiegelebene, die entlang des Diffusorabschnitts ausgerichtet ist, beidseitig zu dem Diffusorabschnitt angeordnet.

Die Aufgabe wird auch gelöst, indem eine Strömungsmaschine mit einem einströmseitigen Einlassbereich und einem abströmseitigen Auslassbereich geschaffen wird, wobei die Strömungsmaschine in dem abströmseitigen Auslassbereich einen erfindungsgemäßen Krümmer oder einen Krümmer nach wenigstens einer der zuvor beschriebenen Ausführungsformen aufweist. In Zusammenhang mit der Strömungsmaschine ergeben sich insbesondere die Vorteile, die bereits in Zusammenhang mit dem Krümmer erläutert wurden.

Vorzugsweise schließt der Krümmer mit seiner Einströmseite an einen Strömungsauslass eines Wandlerabschnitts der Strömungsmaschine an. In dem Wandlerabschnitt ist insbesondere eine Wandlereinrichtung der Strömungsmaschine angeordnet. Die Wandlereinrichtung ist insbesondere ein Turbinenrad der bevorzugt als Turbine oder als Abgasturbolader ausgebildeten Strömungsmaschine.

Gemäß einer Weiterbildung der Erfindung ist vorgesehen, dass der Diffusorabschnitt als Nabendiffusor unmittelbar an eine Nabe der Strömungsmaschine anschließt. Auf diese Weise wird vorteilhaft der Druckverlust über dem Krümmer in besonderem Maße gemindert, außerdem werden die Containmenteigenschaften für die Strömungsmaschine vorteilhaft in besonderer Weise verbessert, insbesondere indem durch den Diffusorabschnitt ein Ausschieben der Nabe und insbesondere der Wandlereinrichtung in axialer Richtung verhindert wird. Insbesondere ist Diffusorabschnitt als Nabendiffusor ausgebildet.

Die Nabe der Strömungsmaschine ist insbesondere eine Nabe der Wandlereinrichtung, insbesondere des Turbinenrads.

Der als Nabendiffusor ausgebildete Diffusorabschnitt schließt vorzugsweise ohne radialen Versatz unmittelbar an die Nabe der Strömungsmaschine an. Insbesondere schließt der Diffusorabschnitt bevorzugt vollumfänglich, das heißt insbesondere entlang einer geschlossenen Umfangslinie, ohne radialen Versatz an die Nabe der Strömungsmaschine an.

Gemäß einer Weiterbildung der Erfindung ist vorgesehen, dass die Strömungsmaschine als Turbine ausgebildet ist. Bei dieser Ausgestaltung ergeben sich in besonderer Weise die bereits erwähnten Vorteile. Die Wandlereinrichtung ist in diesem Fall insbesondere ein Turbinenrad.

Insbesondere ist die Strömungsmaschine als Turbine eines Abgasturboladers ausgebildet.

Die Aufgabe wird auch gelöst, indem ein Abgasturbolader geschaffen wird, der eine als Verdichter ausgebildete erste Strömungsmaschine und eine mit der ersten Strömungsmaschine antriebswirkverbundene, als Turbine ausgebildete zweite Strömungsmaschine aufweist. Die zweite Strömungsmaschine ist als erfindungsgemäße Strömungsmaschine oder als Strömungsmaschine nach wenigstens einer der zuvor beschriebenen Ausführungsformen ausgebildet. In Zusammenhang mit dem Abgasturbolader ergeben sich insbesondere die Vorteile, die bereits in Zusammenhang mit dem Krümmer sowie der Strömungsmaschine erläutert wurden.

Die Aufgabe wird schließlich auch gelöst, indem eine Brennkraftmaschine geschaffen wird, die einen erfindungsgemäßen Krümmer oder einen Krümmer nach wenigstens einer der zuvor beschriebenen Ausführungsformen aufweist, oder die einen erfindungsgemäßen Abgasturbolader oder einen Abgasturbolader nach wenigstens einer der zuvor beschriebenen Ausführungsformen aufweist. In Zusammenhang mit der Brennkraftmaschine ergeben sich insbesondere die Vorteile, die bereits in Zusammenhang mit dem Krümmer sowie dem Abgasturbolader erläutert wurden.

Insbesondere wird mit dem hier vorgeschlagenen Krümmer ein Wirkungsgrad der Brennkraftmaschine vorteilhaft gesteigert, insbesondere durch Reduzierung der durch die Brennkraftmaschine zu leistenden Ausschiebearbeit.

Die Erfindung wird im Folgenden anhand der Zeichnung näher erläutert. Dabei zeigen:
- Figur 1: eine schematische Darstellung eines Ausführungsbeispiels einer Brennkraftmaschine mit einem Ausführungsbeispiel eines Abgasturboladers, einem Ausführungsbeispiel einer Strömungsmaschine und einem Ausführungsbeispiel eines Krümmers;
- Figur 2: eine erste Darstellung des Ausführungsbeispiels des Krümmers gemäß Figur 1;
- Figur 3: eine zweite, einströmseitige Darstellung des Krümmers gemäß Figur 2;
- Figur 4: eine Darstellung des Krümmers gemäß den Figuren 2 und 3 im Längsschnitt;
- Figur 5: eine Schnittdarstellung des Krümmers gemäß den Figuren 2 bis 4 in einer Schnittebene senkrecht zu einer Längsschnittebene und senkrecht zu einer Querschnittsebene;
- Figur 6: eine weitere, ausströmseitige Darstellung des Krümmers gemäß den Figuren 2 bis 5, und
- Figur 7: eine diagrammatische Darstellung der Funktionsweise des Krümmers gemäß den Figuren 2 bis 6.

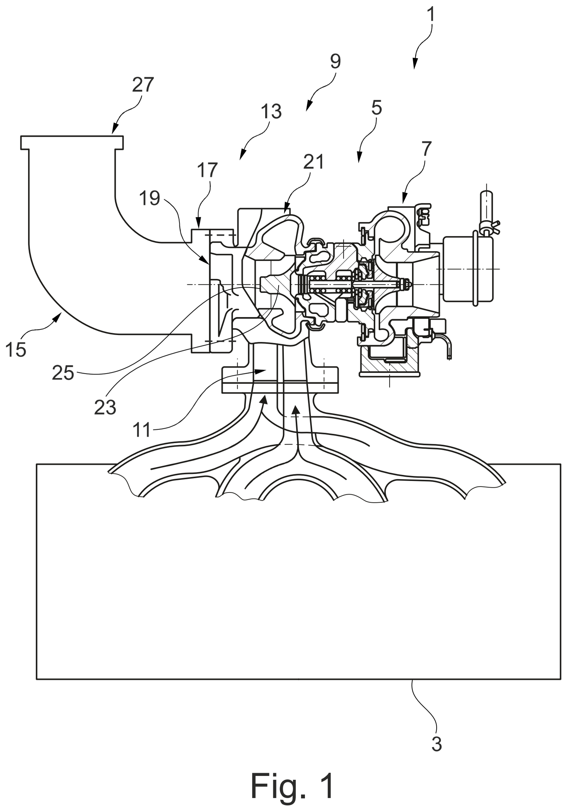

**Fig. 1** zeigt eine schematische Darstellung eines Ausführungsbeispiels einer Brennkraftmaschine 1 mit einem Motorblock 3 und einem Abgasturbolader 5. Der Abgasturbolader 5 weist eine als Verdichter ausgebildete, erste Strömungsmaschine 7 und eine mit der ersten Strömungsmaschine 7 antriebswirkverbundene, als Turbine ausgebildete zweite Strömungsmaschine 9 auf. Die zweite Strömungsmaschine 9 weist einen einströmseitigen Einlassbereich 11 und einen abströmseitigen Auslassbereich 13 auf. In dem abströmseitigen Auslassbereich 13 weist die zweite Strömungsmaschine 9 einen Krümmer 15, insbesondere mit 90°-Umlenkung, auf. Der Krümmer 15 schließt sich dabei mit einer Einströmseite 17 an einen Strömungsauslass 19 eines Wandlerabschnitts 21 der zweiten Strömungsmaschine 9 an. In dem Wandlerabschnitt 21 ist eine Wandlereinrichtung 23 angeordnet, hier insbesondere ein Turbinenrad der als Turbine ausgebildeten zweiten Strömungsmaschine 9.

Die zweite Strömungsmaschine 9 weist in dem Wandlerabschnitt 21 eine Nabe 25 auf; die Nabe 25 ist insbesondere die Nabe der Wandlereinrichtung 23, insbesondere die Nabe des Turbinenrads.

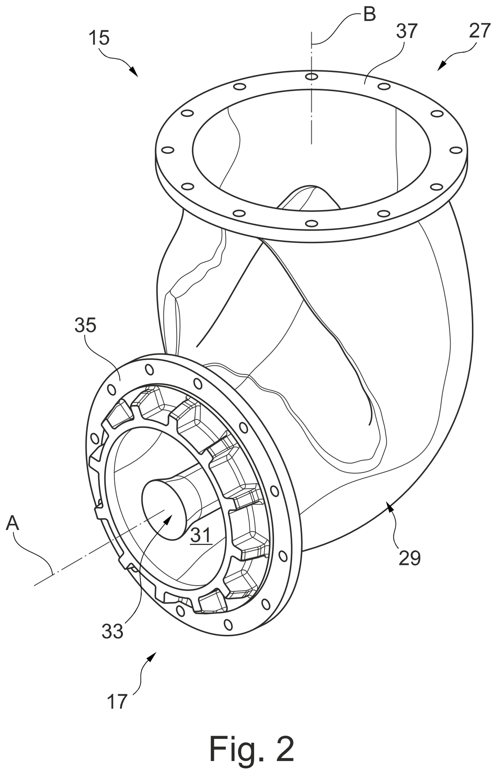

**Fig. 2** zeigt eine erste Darstellung des in Figur 1 dargestellten Ausführungsbeispiels des Krümmers 15.

Gleiche und funktionsgleiche Elemente sind in allen Figuren mit gleichen Bezugszeichen versehen, sodass insofern jeweils auf die vorangegangene Beschreibung verwiesen wird.

Der Krümmer 15 dient zur Strömungsumlenkung eines den Krümmer 15 von der Einströmseite 17 zu einer Ausströmseite 27 durchströmenden Mediums, hier insbesondere von Abgas der Brennkraftmaschine 1. Der Krümmer 15 weist eine Wandung 29 auf, die ein Strömungsvolumen 31 des Krümmers 15 begrenzt. In dem Strömungsvolumen 31 ist einströmseitig zentral, das heißt insbesondere mittig auf einer einströmseitigen Haupt-Strömungsachse A, ein Diffusorabschnitt 33 angeordnet, der mit der Wandung 29 einstückig ausgebildet ist. Hierdurch kann ein Druckverlust über dem Krümmer 15 deutlich reduziert werden. Insbesondere wird eine Rezirkulation an der an den Diffusorabschnitt 33 angrenzenden Nabe 25 minimiert. Die einstückige Ausbildung des Diffusorabschnitts 33 mit der Wandung 29 ermöglicht eine optimierte Strömungsführung, wobei insbesondere Strömungsablösungen zumindest weitgehend vermieden, vorzugweise verhindert werden können. Nicht zuletzt kann so der Wirkungsgrad der Brennkraftmaschine 1, insbesondere des Motorblocks 3, gesteigert werden. Außerdem verhindert der einströmseitig zentral angeordnete Diffusorabschnitt 33 im Fall eines Bersts effektiv ein axiales Ausschieben der Wandlereinrichtung 23, das heißt des Turbinenrads, sodass der Krümmer 15 verbesserte Containmenteigenschaften für die als Turbine ausgebildete zweite Strömungsmaschine 9 bereitstellt.

Der Diffusorabschnitt 33 ist insbesondere als Nabendiffusor ausgebildet und schließt vorzugsweise unmittelbar, insbesondere ohne radialen Versatz, insbesondere vollumfänglich ohne radialen Versatz, an die Nabe 25 an.

Der Diffusorabschnitt 33 ist bevorzugt einströmseitig im Betrieb des Krümmers 15 von dem Medium umströmt in dem Strömungsvolumen 31 angeordnet.

Der Krümmer 15 weist vorzugsweise einen einströmseitigen, ersten Flansch 35 und einen ausströmseitigen, zweiten Flansch 37 auf.

Der Krümmer 15 ist bevorzugt mittels eines generativen Fertigungsverfahrens und/oder mittels eines additiven Fertigungsverfahrens hergestellt. Alternativ ist der Krümmer 15 gegossen.

In Figur 2 ist außerdem noch eine ausströmseitige Haupt-Strömungsachse B dargestellt.

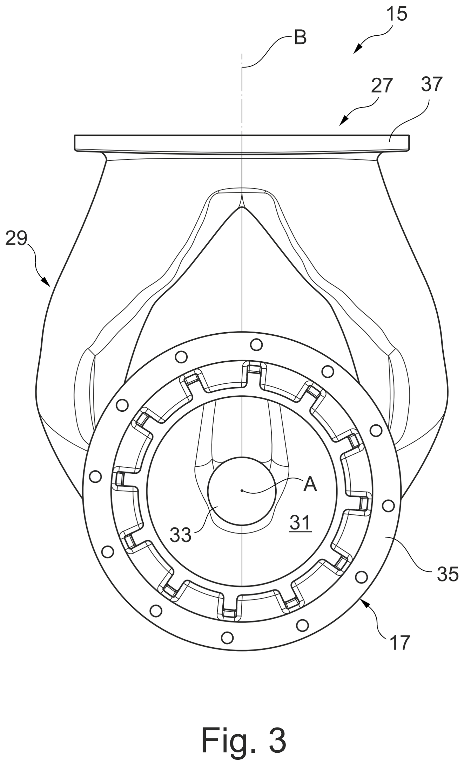

**Fig. 3** zeigt eine zweite, einströmseitige Darstellung des Krümmers 15 gemäß Figur 2. Bei dieser Darstellung wird in besonderer Weise deutlich, dass der Diffusorabschnitt 33 auf der einströmseitigen Haupt-Strömungsachse A mittig angeordnet ist.

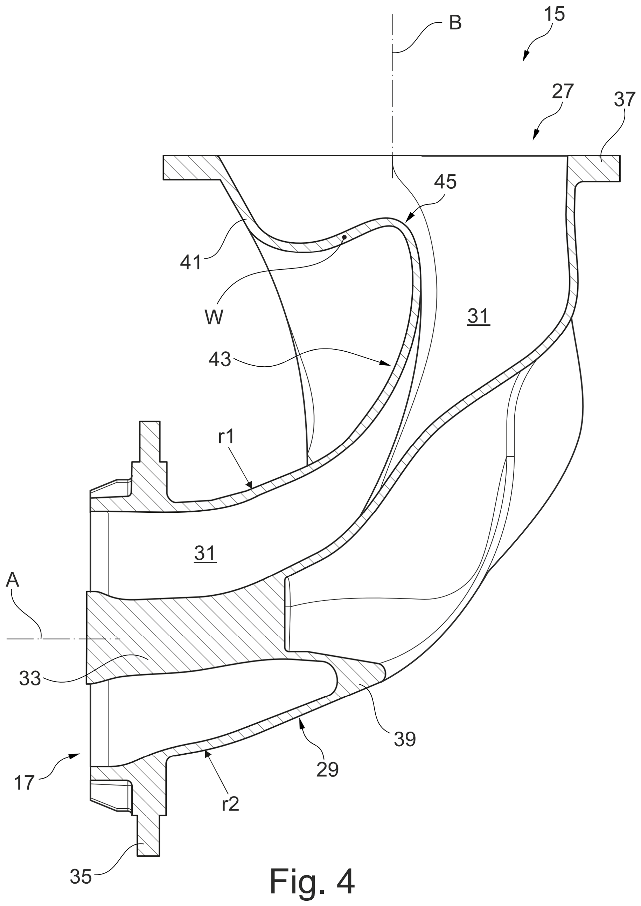

**Fig. 4** zeigt eine Darstellung des Krümmers 15 gemäß den Figuren 2 und 3 im Längsschnitt, das heißt insbesondere in einer Schnittebene, in der sowohl die einströmseitige Haupt-Strömungsachse A als auch die ausströmseitige Haupt-Strömungsachse B liegen. Insbesondere in dieser Schnittdarstellung wird deutlich, dass der Diffusorabschnitt 33 bevorzugt aus der Wandung, 29, insbesondere aus einem Außenwandabschnitt 39 der Wandung 29, ausgeformt ist.

Insbesondere weist die Wandung 29 einen gekrümmten Innenwandabschnitt 41 mit einem ersten, kleineren Krümmungsradius r1, und den gekrümmten Außenwandabschnitt 39 mit einem zweiten, größeren Krümmungsradius r2 auf. Der Außenwandabschnitt 39 ist in das Strömungsvolumen 31 hinein eingeformt, insbesondere eingestülpt, um den Diffusorabschnitt 33 zu bilden.

Der Innenwandabschnitt 41 weist einen Einformabschnitt 43 auf, der in das Strömungsvolumen 31 hinein eingeformt, und in Strömungsrichtung, das heißt zu der Ausströmseite 27 hin, eingezogen, insbesondere - je nach Blickrichtung von außen oder von innerhalb des Strömungsvolumens 31 - eingestülpt oder ausgestülpt, ist. Auf diese Weise kann insbesondere ein Camot'scher Druckverlust über dem Krümmer 15 reduziert werden. Insbesondere kann eine Strömungsablösung im Bereich des Innenwandabschnitts 41 zumindest weitgehend vermieden, vorzugsweise verhindert werden. Insbesondere auch auf diese Weise kann vorteilhaft der Wirkungsgrad der Brennkraftmaschine 1, insbesondere des Motorblocks 3 gesteigert werden.

Insbesondere weist der Einformabschnitt 43 eine zu der Ausströmseite 27 hin ausgerichtete Spitze 45 auf, wobei die Spitze 45 insbesondere die Form einer Kappe, eines Gipfels oder eines Horns aufweist.

Der Innenwandabschnitt 41 weist bevorzugt in der Längsschnittansicht von Figur 4 im Bereich des Einformabschnitts 43 mindestens einen, vorzugsweise genau einen Wendepunkt W auf. Insbesondere weist eine Konturlinie des Innenwandabschnitts 43 den Wendepunkt W auf.

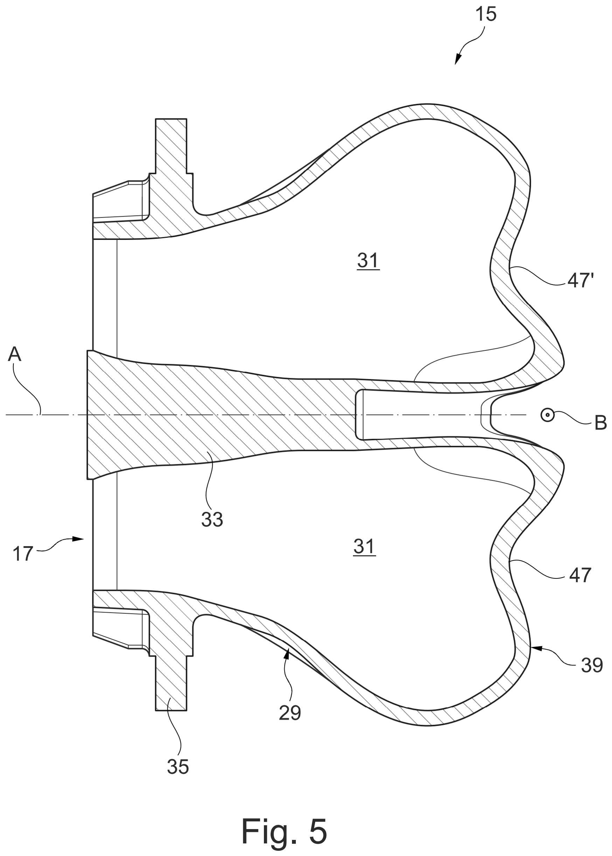

**Fig. 5** zeigt eine Schnittdarstellung des Krümmers 15 gemäß den Figuren 2 bis 4 in einer Schnittebene, die senkrecht auf der Längsschnittebene gemäß Figur 4 und senkrecht auf einer Querschnittsebene steht, nämlich senkrecht auf derjenigen Querschnittsebene, auf der wiederum die einströmseitige Haupt-Strömungsachse A senkrecht steht. Entsprechend liegt die einströmseitige Haupt-Strömungsachse A in der Schnittebene von Figur 5. Die ausströmseitige Haupt-Strömungsachse B steht senkrecht auf der Schnittebene von Figur 5. In der Ansicht von Figur 5 ist dargestellt, dass der Außenwandabschnitt 39 in bevorzugter Ausgestaltung zwei jeweils seitlich, insbesondere symmetrisch, zu dem Diffusorabschnitt 33 angeordnete, in das Strömungsvolumen 31 hinein eingeformte Einbuchtungen 47, 47' aufweist. Diese Ausgestaltung hat sich als besonders strömungsgünstig erwiesen.

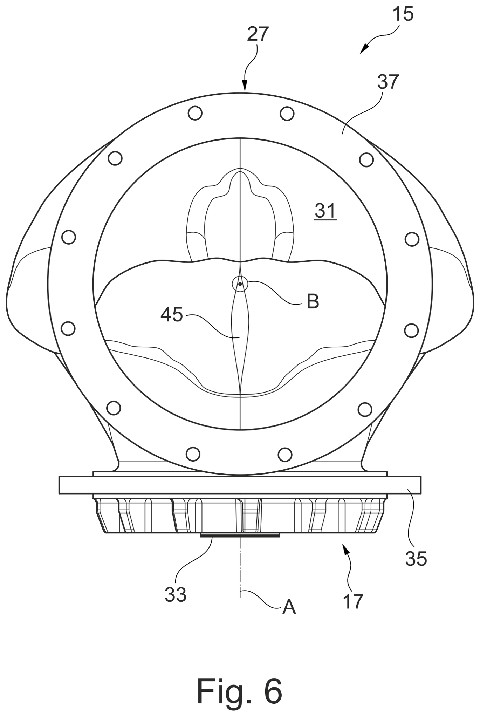

**Fig. 6** zeigt eine weitere, ausströmseitige Darstellung des Krümmers 15 gemäß den Figuren 2 bis 5. Dabei ist hier insbesondere die Spitze 45 des Einformabschnitts 43 gut zu erkennen, da sie dem Blick des Betrachters zugewandt ist.

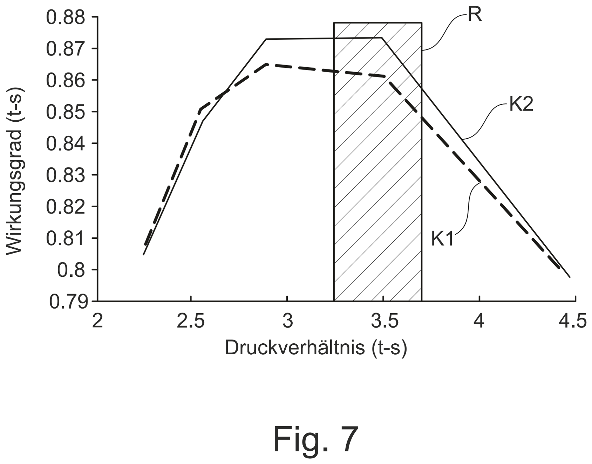

**Fig. 7** zeigt noch eine diagrammatische Darstellung einer Wirkung des Krümmers 15 gemäß den Figuren 2 bis 6. Dabei ist ein Wirkungsgrad einer Turbine in beliebigen Einheiten aufgetragen gegen ein Druckverhältnis - ebenfalls in beliebigen Einheiten - der Turbine. Eine erste, gestrichelte Kurve K1 zeigt den Wirkungsgrad in Abhängigkeit von dem Druckverhältnis bei Verwendung eines herkömmlichen Krümmers. Eine zweite, durchgezogene Kurve K2 zeigt den Wirkungsgrad in Abhängigkeit von dem Druckverhältnis bei Verwendung des erfindungsgemäßen oder erfindungsgemäß bevorzugten Krümmers 15. Außerdem ist in einem schraffierten Rechteck R ein Betriebsbereich des Krümmers 15 dargestellt. Die hier wiedergegebenen Daten basieren auf mittels CFD (Computational Fluid Dynamics) durchgeführten Berechnungen. Diese Berechnungen zeigen - wie in dem Diagramm dargestellt - dass der hier vorgeschlagene Krümmer 15 einen deutlich erhöhten Wirkungsgrad für die Turbine in seinem Betriebsbereich ermöglicht.

Insbesondere betrifft die Erfindung die folgenden Aspekte:
1. Krümmer (15) zur Strömungsumlenkung eines den Krümmer (15) von einer Einströmseite (17) zu einer Ausströmseite (27) durchströmenden Mediums, mit einer ein Strömungsvolumen (31) des Krümmers (15) begrenzenden Wandung (29) und einem in dem Strömungsvolumen (31) einströmseitig zentral angeordneten Diffusorabschnitt (33), wobei der Diffusorabschnitt (33) mit der Wandung (29) einstückig ausgebildet ist.
2. Krümmer (15) nach Aspekt 1, wobei der Diffusorabschnitt (33) einströmseitig im Betrieb des Krümmers (15) umströmt in dem Strömungsvolumen (31) angeordnet ist.
3. Krümmer (15) nach einem der vorhergehenden Aspekte, wobei der Diffusorabschnitt (33) als Nabendiffusor für eine Strömungsmaschine (7,9) ausgebildet ist.
4. Krümmer (15) nach einem der vorhergehenden Aspekte, wobei der Diffusorabschnitt (33) aus der Wandung (29), insbesondere aus einem Außenwandabschnitt (39) der Wandung (29), ausgeformt ist.
5. Krümmer (15) nach Aspekt 4, wobei die Wandung (29) einen gekrümmten Innenwandabschnitt (41) mit einem ersten, kleineren Krümmungsradius (r1) und einen gekrümmten Außenwandabschnitt (39) mit einem zweiten, größeren Krümmungsradius (r2) aufweist, wobei der Außenwandabschnitt (39) in das Strömungsvolumen (31) hinein eingeformt ist, um den Diffusorabschnitt (33) zu bilden.
6. Krümmer (15) zur Strömungsumlenkung eines den Krümmer (15) von einer Einströmseite (17) zu einer Ausströmseite (27) durchströmenden Mediums, mit einer ein Strömungsvolumen (31) des Krümmers (15) begrenzenden Wandung (29), wobei die Wandung (29) einen gekrümmten Innenwandabschnitt (41) mit einem ersten, kleineren Krümmungsradius (r1) und einen gekrümmten Außenwandabschnitt (39) mit einem zweiten, größeren Krümmungsradius (r2) aufweist, wobei der Innenwandabschnitt (41) einen Einformabschnitt (43) aufweist, wobei der Einformabschnitt (43) in das Strömungsvolumen (31) hinein eingeformt und in Strömungsrichtung eingezogen ist.
7. Krümmer (15) nach Aspekt 6, wobei der Einformabschnitt (43) eine zu der Ausströmseite (27) hin ausgerichtete Spitze (45) aufweist.
8. Krümmer (15) nach einem der Aspekt 6 oder 7, wobei der Innenwandabschnitt (41) in einer Längsschnittansicht des Krümmers (15) im Bereich des Einformabschnitts (43) mindestens einen Wendepunkt (W) aufweist.
9. Krümmer (15) nach einem der vorhergehenden Aspekte, wobei der Außenwandabschnitt (39) in einer Schnittebene, die auf einer Querschnittsebene und auf einer Längsschnittebene des Krümmers (15) senkrecht steht, zwei seitlich von dem Diffusorabschnitt (33) angeordnete, in das Strömungsvolumen (31) eingeformte Einbuchtungen (47,47') aufweist.
10. Strömungsmaschine (7,9) mit einem einströmseitigen Einlassbereich (11) und einem abströmseitigen Auslassbereich (13), wobei die Strömungsmaschine (7,9) in dem abströmseitigen Auslassbereich (13) einen Krümmer (15) nach einem der vorhergehenden Aspekte aufweist.
11. Strömungsmaschine (7,9) nach Aspekt 10, wobei der Diffusorabschnitt (33) als Nabendiffusor unmittelbar, vorzugsweise ohne radialen Versatz, an eine Nabe (25) der Strömungsmaschine (7,9) anschließt.
12. Strömungsmaschine (7,9) nach einem der Aspekte 10 oder 11, wobei die Strömungsmaschine (7,9) als Turbine, insbesondere als Turbine eines Abgasturboladers (5), ausgebildet ist.
13. Abgasturbolader (5) mit einer als Verdichter ausgebildeten ersten Strömungsmaschine (7) und einer mit der ersten Strömungsmaschine (7) antriebswirkverbundenen, als Turbine ausgebildeten zweiten Strömungsmaschine (9), wobei die zweite Strömungsmaschine (9) als Strömungsmaschine (9) nach einem der Aspekte 10 bis 12 ausgebildet ist.
14. Brennkraftmaschine (1) mit einem Krümmer (15) nach einem der Aspekte 1 bis 9, oder mit einem Abgasturbolader (5) nach Aspekt 13.

## Patentansprüche

1. Krümmer (15) zur Strömungsumlenkung eines den Krümmer (15) von einer Einströmseite (17) zu einer Ausströmseite (27) durchströmenden Mediums, mit einer ein Strömungsvolumen (31) des Krümmers (15) begrenzenden Wandung (29), wobei die Wandung (29) einen gekrümmten Innenwandabschnitt (41) mit einem ersten, kleineren Krümmungsradius (r1) und einen gekrümmten Außenwandabschnitt (39) mit einem zweiten, größeren Krümmungsradius (r2) aufweist, wobei der Innenwandabschnitt (41) einen Einformabschnitt (43) aufweist, wobei der Einformabschnitt (43) in das Strömungsvolumen (31) hinein eingeformt und in Strömungsrichtung zu der Ausströmseite (27) hin eingezogen ist.

2. Krümmer (15) nach Anspruch 1, wobei der Einformabschnitt (43) eine zu der Ausströmseite (27) hin ausgerichtete Spitze (45) aufweist.

3. Krümmer (15) nach Anspruch 1 oder 2, wobei der Innenwandabschnitt (41) in einer Längsschnittansicht des Krümmers (15) im Bereich des Einformabschnitts (43) mindestens einen Wendepunkt (W) aufweist.

4. Strömungsmaschine (7,9) mit einem einströmseitigen Einlassbereich (11) und einem abströmseitigen Auslassbereich (13), wobei die Strömungsmaschine (7,9) in dem abströmseitigen Auslassbereich (13) einen Krümmer (15) nach einem der vorhergehenden Ansprüche aufweist.

5. Strömungsmaschine (7,9) nach Anspruch 4, wobei die Strömungsmaschine (7,9) als Turbine, insbesondere als Turbine eines Abgasturboladers (5), ausgebildet ist.

6. Abgasturbolader (5) mit einer als Verdichter ausgebildeten ersten Strömungsmaschine (7) und einer mit der ersten Strömungsmaschine (7) antriebswirkverbundenen, als Turbine ausgebildeten zweiten Strömungsmaschine (9), wobei die zweite Strömungsmaschine (9) als Strömungsmaschine (9) nach Anspruch 4 oder 5 ausgebildet ist.

7. Brennkraftmaschine (1) mit einem Krümmer (15) nach einem der Ansprüche 1 bis 3, oder mit einem Abgasturbolader (5) nach Anspruch 6.
